# EUROPÄISCHE PATENTSCHRIFT

(11) **EP 3 409 897 B1**
(45) Veröffentlichungstag und Bekanntmachung des Hinweises auf die Patenterteilung: **18.12.2019**
(21) Anmeldenummer: 17173194.6
(22) Anmeldetag: 29.05.2017
(51) Int. Cl.: F01D 11/00, F01D 25/24, F02C 7/28, F16J 15/44

(54) **DICHTUNGSANORDNUNG FÜR EINE STRÖMUNGSMASCHINE, VERFAHREN ZUR HERSTELLUNG EINER DICHTUNGSANORDNUNG SOWIE STRÖMUNGSMASCHINE**
SEAL ASSEMBLY FOR A TURBOMACHINE, METHOD FOR PRODUCING A SEAL ASSEMBLY AND TURBOMACHINE
AGENCEMENT D'ÉTANCHÉITÉ POUR UNE TURBOMACHINE, MÉTHODE DE FABRICATION DE L'AGENCEMENT D'ÉTANCHÉITÉ ET TURBOMACHINE

(43) Veröffentlichungstag der Anmeldung: 05.12.2018
(73) Patentinhaber: MTU Aero Engines AG, 80995 München (DE)
(72) Erfinder: SCHLEMMER, Markus, 84048 Mainburg / Sandelzhausen (DE); PIRKER, Klaus, St. Lambert, QC, J4R2V3 (CA); SOSNOWKA, Lukasz, 25-312 Rzeszow (PL); KISLINGER, Bernd, 85276 Reisgang (DE); STANKA, Rudolf, 84431 Rattenkirchen (DE); REGULSKI, Marcin, 35-505 Rzeszow (PL)

(56) Entgegenhaltungen:
- EP-A1- 2 722 486
- EP-A2- 2 559 849
- DE-A1- 3 724 210
- FR-A1- 3 003 599
- US-A1- 2011 044 798
- US-B1- 6 179 560

## Beschreibung

Die Erfindung betrifft eine Dichtungsanordnung für eine Strömungsmaschine, insbesondere für ein Flugtriebwerk, nach dem Oberbegriff des Anspruchs 1. Weitere Aspekte der Erfindung betreffen ein Verfahren zur Herstellung einer Dichtungsanordnung für eine Strömungsmaschine sowie eine Strömungsmaschine.

Bei der Herstellung von Strömungsmaschinen ist es bekannt Leitschaufelringe aus einer Mehrzahl von Leitschaufelsegmenten zusammenzusetzen. Derartige Leitschaufelringe dienen zur Ausrichtung eines beim Betrieb von Strömungsmaschinen durch diese strömenden Mediums (Arbeitsmediums). Mittels der Leitschaufelringe kann bei der Ausrichtung zumindest ein Teil der kinetischen Energie des strömenden Mediums in eine Drallenergie umgewandelt werden. Diese Drallenergie kann genutzt werden, um ein an den Leitschaufelring anschließendes Laufrad zu bewegen (anzutreiben) und dadurch eine mit dem Laufrad verbundene Antriebswelle der Strömungsmaschine in eine Rotationsbewegung zu versetzen. Um Strömungsmaschinen mit einem relativ großen Wirkungsgrad betreiben zu können, ist es sinnvoll, etwaige Spalte - beispielsweise zwischen dem Leitschaufelring und einem daran in einer radialer Erstreckungsrichtung angrenzenden Wellengehäuseteil, wie zum Beispiel einem Rotorgehäuse der Strömungsmaschine - möglichst klein zu halten. Dadurch kann eine ungewollte Fluidleckage des Mediums zumindest weitgehend unterbunden werden.

Aus der JP 2003343206 A1 ist eine Dichtungsanordnung nach dem Oberbegriff von Anspruch 1 bekannt. Nachteilig an dieser vorbekannten Konstruktion ist jedoch, dass die Anbindung des Statorelementes an die Dichtungsanordnung sehr massiv ausgebildet ist. Zudem treten im Bereich der Anbindung zwischen dem Statorelement und der Dichtungsanordnung, insbesondere in einer Aufnahme für das Statorelement Fluidleckagen des Mediums auf. Diese Fluidleckagen sind insbesondere im Bereich eines Axialstegs eines Dichtungsträgers der Dichtungsanordnung vorhanden. In diesem Bereich ist die Aufnahme für das Statorelement ungenügend abgedichtet.

Aus der EP 2 762 684 A1 ist eine vergleichbare Dichtungsanordnung für eine Strömungsmaschine beschrieben. Dabei ist ein Dichtungsträger der Dichtungsanordnung einstückig ausgebildet und insbesondere gegossen oder geschmiedet. Nachteilig an diesem bekannten Dichtungsträger ist jedoch, dass der Axialsteg zur Anordnung eines Dichtungselements nur sehr kurz ausgebildet ist. Diese vorbekannte Konstruktion ist insbesondere für die Anordnung von Bürstendichtungen ausgerichtet. Allerdings kann an dem axial sich erstreckenden Halteabschnitt des Axialstegs auch eine Wabendichtung angeordnet werden. Die Halte- beziehungsweise Anlagefläche des Axialstegs ist allerdings sehr klein ausgebildet und daher nur für die Anordnung kleinflächiger Wabendichtungen geeignet. Dadurch kann es zu Undichtigkeiten im Bereich des abzudichtenden Radialspalts zwischen dem Rotor und dem Stator kommen.

Weitere gattungsgemäße Dichtungsanordnungen für Strömungsmaschinen sind aus der EP 2 060 741 A2 und der EP 2 551 454 A2 bekannt. Beide Dichtungsanordnungen sind sehr massiv ausgebildet, da hier zwei Radialstege an einem Dichtungsträger zur Ausbildung einer Aufnahme für das Statorelement ausgebildet sind. Neben einem relativ hohen Gewicht sind diese bekannten Dichtungsanordnungen schwieriger zu fertigen, da Material im Zwischenraum zwischen den Axialstegen entfernt werden muss.

Weitere Dichtungsanordnungen sind aus den Dokumenten US 2011/044798 A1, DE 37 24 210 A1, EP2559849A2, EP2722486A1, US 6 179 560 B1 und FR3003599A1 bekannt.

Aufgabe der vorliegenden Erfindung ist es, Dichtungsanordnung für eine Strömungsmaschine, ein Verfahren zur Herstellung einer Dichtungsanordnung für eine Strömungsmaschine sowie eine Strömungsmaschine der eingangs genannten Art bereitzustellen, die insbesondere eine verbesserte Dichtigkeit gegenüber einer Fluidleckage aufweisen.

Diese Aufgabe wird durch eine Dichtungsanordnung mit den Merkmalen des Patentanspruchs 1, ein Verfahren mit den Merkmalen des Patentanspruchs 10 sowie durch eine Strömungsmaschine mit den Merkmalen des Patentanspruchs 12 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte und umgekehrt anzusehen sind.

Ein erster Aspekt der Erfindung betrifft eine Dichtungsanordnung für eine Strömungsmaschine, insbesondere für ein Flugtriebwerk, zur Abdichtung eines Radialspaltes zwischen einem Rotor und einem Stator, umfassend mindestens ein Dichtelement, mindestens einen Dichtungsträger zur Halterung und/oder Befestigung des mindestens einen Dichtungselements, wobei der Dichtungsträger einen in eine radiale Erstreckungsrichtung sich erstreckenden Radialsteg und einen damit einstückig ausgebildeten, in eine axiale Erstreckungsrichtung sich erstreckenden Axialsteg aufweist und das Dichtungselement an einer radial innenliegenden Anlagefläche des Axialstegs angeordnet ist. Die Dichtungsanordnung umfasst zudem einen in Strömungsrichtung der Strömungsmaschine betrachtet vorderen Ring oder ein vorderes Ringsegment und/oder einen hinteren Ring oder ein hinteres Ringsegment mit jeweils einem radial verlaufenden Steg. Dabei bildet einer dieser radial verlaufenden Stege mit dem Radialsteg des Dichtungsträgers eine Aufnahme zur Aufnahme eines Elementes des Stators aus, wobei an einem radial inneren Ende von zumindest diesem radial verlaufenden Steg ein sich axial erstreckender Innenflansch ausgebildet ist und zumindest der Innenflansch des radial verlaufenden Steges, welcher mit dem Radialsteg des Dichtungsträgers die Aufnahme ausbildet, mit einer radial innenliegenden Oberfläche des Axialstegs stoff- und/oder formschlüssig verbunden ist. Dabei kann der Innenflansch beispielsweise mit der Oberfläche des Axialstegs verlötet oder verschweißt sein. Auch Schraub-, Steck- oder Klemmverbindungen oder Kombinationen aus stoff- und formschlüssigen Verbindungen sind denkbar. Durch die stoff- und/oder formschlüssige Verbindung des Innenflansches mit dem Axialsteg des Dichtungsträgers ist vorteilhafterweise gewährleistet, dass die Aufnahme für das Statorelement in diesem Bereich dichtend abgeschlossen ist. Fluidleckagen des Mediums der Strömungsmaschine sind ausgeschlossen. Durch die verbesserte Dichtigkeit in diesem Bereich erhöht sich der Wirkungsgrad der Strömungsmaschine signifikant.

In einer weiteren vorteilhaften Ausgestaltung der erfindungsgemäßen Dichtungsanordnung ist an einem radial äußeren Ende zumindest von einem der radial verlaufenden Stege der Ringe beziehungsweise Ringsegmente ein sich axial erstreckender Außenflansch ausgebildet. Dabei wirkt der Außenflansch beispielsweise mit einem entsprechend ausgebildeten Bauteil einer benachbarten Laufschaufelreihe zusammen, um ein direktes radiales Ausströmen des Strömungsmediums, insbesondere des Heißgases aus dem Strömungskanal in die radial innere Gehäusestruktur zu verhindern.

In einer weiteren vorteilhaften Ausgestaltung der erfindungsgemäßen Dichtungsanordnung sind der vordere Ring oder das vordere Ringsegment und/oder der hintere Ring und/oder das hintere Ringsegment als Blechelemente ausgebildet. Dadurch können der vordere Ring beziehungsweise das vordere Ringsegment und/oder der hintere Ring beziehungsweise das hintere Ringsegment sehr einfach und insbesondere als leichtes Bauelement hergestellt werden. Insgesamt ergibt sich dadurch vorteilhafterweise eine deutliche Gewichtsreduktion der erfindungsgemäßen Dichtungsanordnung gegenüber den im Stand der Technik bekannten Dichtungsanordnungen. Die Herstellung der Ringe beziehungsweise Ringsegmente kann dabei mittels Walzen erfolgen. Üblicherweise sind die Ringe beziehungsweise Ringsegmente einstückig ausgebildet. Es besteht aber auch die Möglichkeit, die einzelnen Elemente des vorderen oder hinteren Rings beziehungsweise Ringsegments aus Einzelteilen zu fertigen und diese beispielsweise miteinander zu verlöten oder zu verschweißen. Des Weiteren besteht die Möglichkeit, die genannten Ringe beziehungsweise Ringsegmente beispielsweise aus einem Nickel-Basiswerkstoff herzustellen, insbesondere mittels eines spanenden Verfahrens oder auch eines additiven Fertigungsverfahrens.

In der erfindungsgemäßen Dichtungsanordnung ist der Dichtungsträger T-förmig ausgebildet, derart, dass sich der Axialsteg in axialer Richtung beiderseits über einen Verbindungsbereich zwischen dem Radialsteg und dem Axialsteg hinaus erstreckt. Durch diese Ausgestaltung des Dichtungsträgers wird vorteilhafterweise eine relativ große, radial innenliegende Anlagefläche des Axialstegs zur Halterung und/oder Befestigung des mindestens einen Dichtungselements bereitgestellt. Das Dichtungselement ist üblicherweise als Wabendichtung ausgebildet. Es besteht aber auch die Möglichkeit, dass bürstenartige Dichtungselemente an dem Axialsteg des Dichtungsträgers befestigt werden.

Der einstückig ausgebildete T-förmige Dichtungsträger weist vorzugsweise genau einen Radialsteg auf. Dies ist besonders vorteilhaft für die Herstellung, da beispielsweise keine aufwändige Materialentfernung zwischen zwei Radialstegen erforderlich ist. Zudem kann gegenüber massiv ausgebildeten einstückigen Dichtungsträgern, die zwei oder mehr Radialstege aufweisen, Gewicht eingespart werden.

In weiteren vorteilhaften Ausgestaltungen der erfindungsgemäßen Dichtungsanordnung ist das Element des Stators ein Schaufelfuß oder ein Schaufelfußsegment eines Leitschaufelrings, eines Leitschaufelringsegments oder einer Leitschaufel der Strömungsmaschine. Die Dichtungsanordnung kann in diesem Fall als so genannter SIAS (Static Inner Air Seal)-Ring oder SIAS-Ringsegment ausgebildet sein.

Zudem kann ein Gleitstein mittels mindestens einem Axialbolzen mit den radial verlaufenden Stegen der vorderen oder hinteren Ringe beziehungsweise Ringsegmente sowie dem Axialsteg des Dichtungsträgers verbunden sein. Der Axialbolzen greift dabei durch entsprechende Öffnungen in den genannten Elementen. Dadurch ergibt sich eine axiale Sicherung des Schaufelfußes an der Dichtungsanordnung. Der Gleitstein kann dabei aus Metall, einer Metalllegierung, Keramik oder anderen geeigneten Materialien, insbesondere hochtemperaturfesten Materialien, bestehen. In weiteren vorteilhaften Ausgestaltungen der erfindungsgemäßen Dichtungsanordnung ist der Dichtungsträger der Dichtungsanordnung mittels Schmieden, Gießen, Drehen oder einem additiven Fertigungsverfahren einstückig hergestellt. Dadurch ist der Dichtungsträger sehr stabil ausgebildet und kann zudem kostengünstig hergestellt werden. Damit kann eine volle Kraftübertragung über den Dichtungsträger und somit der Dichtungsanordnung insgesamt erfolgen.

Ein zweiter Aspekt der Erfindung betrifft ein Verfahren zur Herstellung der Dichtungsanordnung gemäß dem ersten Erfindungsaspekt umfassend zumindest die folgenden Verfahrensschritte: Herstellen des Dichtungsträgers der Dichtungsanordnung mittels Schmieden, Gießen, Drehen oder einem additiven Fertigungsverfahren; Anordnen des vorderen Rings oder des vorderen Ringsegments und/oder des hinteren Rings oder des hinteren Ringsegments im Bereich des Radialstegs des Dichtungsträgers zur Ausbildung der Aufnahme für das Statorelement und stoff- und/oder formschlüssiges Verbinden des sich axial erstreckenden Innenflansches des die Aufnahme ausbildenden vorderen Rings oder vorderen Ringsegments und/oder hinteren Rings oder hinteren Ringsegments mit der radial innenliegenden Oberfläche des Axialstegs des Dichtungsträgers. Das insbesondere einstückige Herstellen des Dichtungsträgers kann einfach und kostengünstig durchgeführt werden und ergibt einen strukturell äußert stabilen Dichtungsträger. Zudem gewährleistet die stoff- und/oder formschlüssige Verbindung zwischen dem sich axial erstreckenden Innenflansch und der Oberfläche des Axialstegs des Dichtungsträgers eine Abdichtung der entstandenen Aufnahme in diesem Bereich gegenüber den diesen Bereich umgebenden Gehäusestrukturen. Dadurch wird die Dichtigkeit der Dichtungsanordnung, insbesondere die Abdichtung im Bereich eines Radialspalts zwischen einem Rotor und einem Stator deutlich erhöht. Der Innenflansch kann dabei mit der Oberfläche des Axialstegs verlötet oder verschweißt sein. Auch andere stoffschlüssige Verbindungsmöglichkeiten sind denkbar. Des Weiteren kann der Innenflansch mit der genannten Oberfläche auch verschraubt oder verklebt sowie mittels einer Steckverbindung oder einer Klemmverbindung verbunden sein. Auch Kombinationen von stoff- und formschlüssigen Verbindungen sind denkbar.

Weitere Vorteile ergeben sich, wenn der vordere Ring oder das vordere Ringsegment und/oder der hintere Ring oder das hintere Ringsegment als Blechelemente ausgebildet sind. Diese können insbesondere durch ein entsprechendes Walzen einstückig hergestellt werden. Aber auch ein Verschweißen oder Verlöten mehrerer Einzelelemente der genannten Ringe beziehungsweise Ringsegmente ist denkbar. In Kombination mit dem einstückig hergestellten Dichtungsträger, der insbesondere aus Metall oder Metalllegierungen, wie zum Beispiel aus Nickelbasiswerkstoffen bestehen kann, und der Ausgestaltung der Ringe beziehungsweise Ringsegmente als Blechelemente ergibt sich eine Art Hybridbauweise, die zu einer deutlichen Gewichtsreduzierung der Dichtungsanordnung insgesamt führt.

Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Ein dritter Aspekt der Erfindung betrifft eine Strömungsmaschine, insbesondere ein Flugtriebwerk, mit mindestens einer Dichtungsanordnung gemäß dem ersten Erfindungsaspekts und/oder mit mindestens einer Dichtungsanordnung hergestellt mittels einem Verfahren gemäß dem zweiten Erfindungsaspekt. Die Merkmale und deren Vorteile des dritten Erfindungsaspekts sind den Beschreibungen des ersten und zweiten Erfindungsaspekts zu entnehmen, wobei vorteilhafte Ausgestaltungen des ersten und zweiten Erfindungsaspekts als vorteilhafte Ausgestaltungen des dritten Erfindungsaspekts und umgekehrt anzusehen sind. Insbesondere kann der Wirkungsgrad der erfindungsgemäßen Strömungsmaschine deutlich erhöht werden.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische Schnittdarstellung der erfindungsgemäßen Dichtungsanordnung;
- Fig. 2: eine schematische Perspektivdarstellung der erfindungsgemäßen Dichtungsanordnung gemäß Figur 1; und
- Fig. 3: eine weitere schematische Perspektivdarstellung der erfindungsgemäßen Dichtungsanordnung gemäß Figur 1.

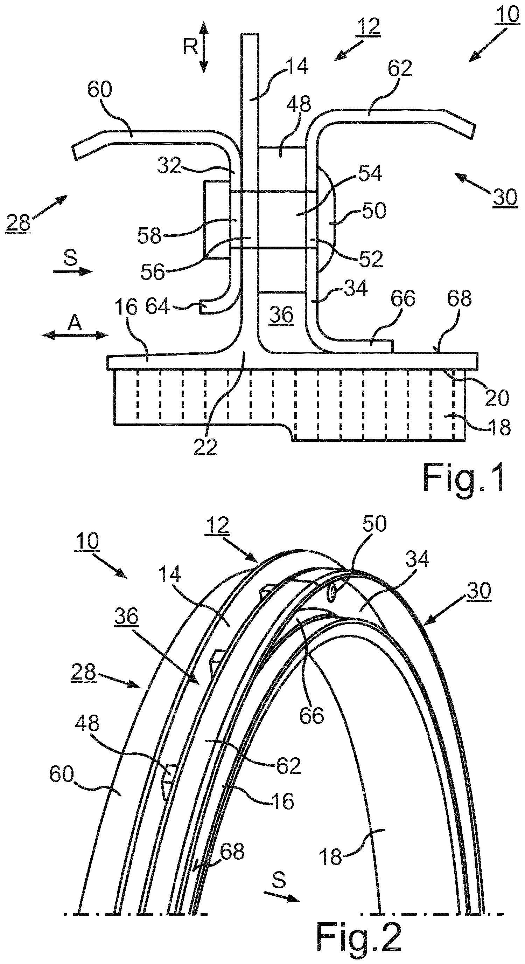

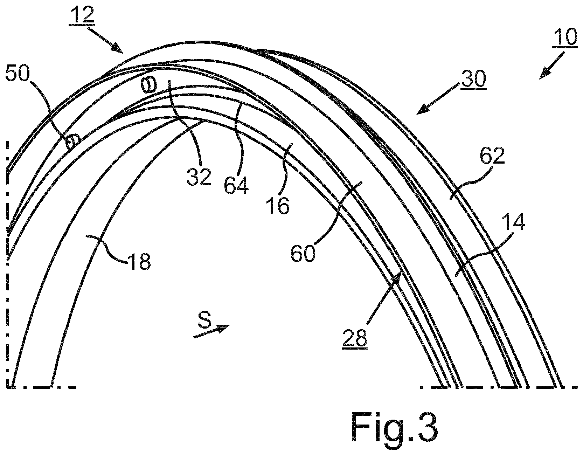

Fig. 1 zeigt eine schematische Schnittdarstellung einer Dichtungsanordnung 10 für eine Strömungsmaschine, insbesondere für ein Flugtriebwerk. Die Dichtungsanordnung dient dabei zur Abdichtung eines Radialspaltes zwischen einem Rotor und einem Stator der Strömungsmaschine. In dem dargestellten Ausführungsbeispiel (siehe auch Figuren 2 und 3) handelt es sich bei dem Stator um einen Leitschaufelring einer Gasturbine.

Die Dichtungsanordnung 10 weist einen Dichtungsträger 12 zur Halterung und/oder Befestigung eines Dichtungselements 18 auf, wobei der Dichtungsträger 12 einen in eine radiale Erstreckungsrichtung R sich erstreckenden Radialsteg 14 und einen damit einstückig ausgebildeten, in eine axiale Erstreckungsrichtung A sich erstreckenden Axialsteg 16 aufweist. Die Angaben "radial" und "axial" können auch Richtungen umfassen, die von einer idealen axialen oder radialen Erstreckungsrichtung abweichen. Abweichungen von der idealen axialen oder radialen Erstreckungsrichtung in einem Winkelbereich zwischen +15° und -15° sind denkbar. Man erkennt, dass das Dichtungselement 18 an einer radial innenliegenden Anlagefläche 20 des Axialstegs 16 angeordnet ist. In dem dargestellten Ausführungsbeispiel handelt es sich bei dem Dichtungselement 18 um eine Wabendichtung. Die Wabendichtung kann aus üblichen Materialien, insbesondere aus Metall, einer Metalllegierung, Keramik oder auch Kombinationen dieser Materialien bestehen. Der Dichtungsträger 12 ist einstückig mittels Schmieden, Gießen, Drehen oder einem additiven Fertigungsverfahren hergestellt. Als Material für den Dichtungsträger 12 kommen wiederum Metalle, Metalllegierungen oder andere hochtemperaturgeeignete Materialien oder eine Kombination daraus in Frage. Insbesondere kann es sich bei dem Material des Dichtungsträgers 12 um einen Nickelbasiswerkstoff handeln. In dem dargestellten Ausführungsbeispiel sind mehrere Dichtungselemente 18 in Umfangsrichtung jeweils nebeneinander an dem Axialsteg 16 angeordnet und bilden einen eine Rotornabe umfassenden geschlossenen beziehungsweise nahezu geschlossenen Dichtelementring (vergleiche auch Figuren 2 und 3). Unter "Anordnen" des Dichtungselements 18 an dem Axialsteg 16 wird eine stoff- und/oder formschlüssige, lösbare oder nicht-lösbare Verbindung verstanden. Des Weiteren besteht die Möglichkeit, dass zwischen der radial innenliegenden Anlagefläche 20 des Axialstegs 16 und der entsprechenden Anlagefläche des Dichtungselements 18 eine oder mehrere Zwischenlagen oder auch Halteelemente für das Dichtungselement 18 angeordnet werden können.

Des Weiteren erkennt man, dass die Dichtungsanordnung 10 einen in Strömungsrichtung S betrachtet vorderen Ring oder ein vorderes Ringsegment 28 und einen hinteren Ring oder ein hinteres Ringsegment 30 mit jeweils einem radial verlaufenden Steg 32, 34 umfasst. Mehrere vordere beziehungsweise hintere Ringsegmente 28 bilden einen entsprechenden vorderen oder hinteren Ring der Dichtungsanordnung 10 aus. In dem dargestellten Ausführungsbeispiel weist das vordere Ringsegment 28 einen radial innenliegenden, sich axial erstreckenden Innenflansch 64 und einen radial außenliegenden, sich axial erstreckenden Außenflansch 60 auf, wobei der Außenflansch 60 und der Innenflansch 64 einstückig mit dem radial verlaufenden Steg 32 verbunden sind. Das hintere Ringsegment 30 weist ebenfalls einen radial innenliegenden, sich axial erstreckenden Innenflansch 66 sowie einen radial außenliegenden, sich ebenfalls axial erstreckenden Außenflansch 62 auf. Der Innenflansch 66 sowie der Außenflansch 62 sind wiederum einstückig mit dem Steg 34 verbunden.

Des Weiteren erkennt man, dass der Steg 34 mit dem Radialsteg 14 des Dichtungsträgers 12 eine Aufnahme 36 zur Aufnahme eines Elementes des Stators ausbildet. In dem dargestellten Ausführungsbeispiel dient die Aufnahme 36 zur Aufnahme, Halterung und Befestigung eines Schaufelfußes beziehungsweise Schaufelfußsegments deines Leitschaufelringsegments. Grundsätzlich kann das aufzunehmende Statorelement ein Gehäuseabschnitt der Strömungsmaschine, ein Abschnitt einer Leitschaufel, ein Abschnitt eines Schaufelträgers und dergleichen sein. Beispielsweise kann die Dichtungsanordnung 10 im Bereich einer Niederdruckturbine eines Flugtriebwerks angeordnet sein.

Zudem erkennt man, dass der Innenflansch 66 des radial verlaufenden Steges 34, welcher mit dem Axialsteg 14 des Dichtungsträgers 12 die Aufnahme 36 ausbildet, mit einer radial innenliegenden Oberfläche 68 des Axialstegs stoffschlüssig verbunden ist. Der Innenflansch 66 kann dabei mit der Oberfläche 68 verlötet oder verschweißt sein. Dabei kann beispielsweise eine Lötfolie zur Anwendung kommen. Zudem besteht die Möglichkeit verschiedene Schweißverfahren, wie zum Beispiel Punkt-, Reib-, Ring- oder Nahtschweißverfahren anzuwenden. Auch kann der Innenflansch 66 mit der Oberfläche 68 formschlüssig mittels Schraub-, Steck- oder Klemmverbindungen verbunden sein (nicht dargestellt). Je nach Anwendungsfall kann der Stoffschluss auch mittels einer Klebung der Bauteile erfolgen. Auch eine Kombination von stoff- und formschlüssigen Verbindungen ist möglich.

Des Weiteren wird deutlich, dass in dem dargestellten Ausführungsbeispiel der vordere Ring beziehungsweise das vordere Ringsegment 28 wie auch der hintere Ring beziehungsweise das hintere Ringsegment 30 im Querschnitt C-förmig ausgebildet sind. Die beiden Außenflansche 60, 62 dienen zur Stabilisierung der Ringe 28, 30 sowie zur zumindest teilweisen Abdichtung dieses Bereichs der Gehäusestruktur der Strömungsmaschine gegenüber dem Arbeitsmedium der Strömungsmaschine.

Zudem erkennt man, dass der Dichtungsträger 12 T-förmig ausgebildet ist, derart, dass sich der Axialsteg 16 in axialer Richtung A beiderseits über einen Verbindungsbereich 22 zwischen dem Radialsteg 14 und dem Axialsteg 16 hinaus erstreckt. Dadurch wird eine flächenmäßig große Anlagefläche 20 zur Anordnung eines entsprechenden Dichtungselements 18 bereitgestellt. Des Weiteren wird deutlich, dass in der Ausnehmung 36 ein Gleitstein 48 angeordnet ist, der mittels eines Axialbolzens 50 an der Dichtungsanordnung 10 befestigt ist. Über entsprechende Öffnungen 52, 54, 56, 58 in den Stegen 32, 34, dem Radialsteg 14 und dem Gleitstein 48 wird der Axialbolzen 50 hindurchgeführt und entsprechend verankert.

Fig. 2 zeigt eine schematische Perspektivdarstellung der Dichtungsanordnung 10 gemäß Fig. 1. Man erkennt die ringförmige Ausgestaltung des Dichtungsträgers 12 sowie der vorderen und hinteren Ringe 28, 30. Des Weiteren wird deutlich, dass die genannte Ringform durch die Verbindung einzelner Ringsegmente erzielt wird. Entsprechendes gilt für die Anordnung und Ausgestaltung der Dichtungselemente 18. Man erkennt wiederum, dass der Radialsteg 14 mit dem Steg 34 des hinteren Ringes 30 die Aufnahme 36 ausbildet. In der Aufnahme 36 sind in vordefinierten Abständen die Gleitsteine 48 mittels der Axialbolzen 50 befestigt. Der ringförmige Innenflansch 66 des hinteren Ringes 30 liegt auf der radial außenliegenden Oberfläche 68 des Axialstegs 16 auf und ist damit stoffschlüssig verbunden. Die umlaufende Aufnahme 36 wird damit in diesem Bereich dichtend abgeschlossen.

Fig. 3 zeigt eine weitere schematische Perspektivdarstellung der Dichtungsanordnung 10 gemäß Fig. 1. Man erkennt die Anordnung des vorderen Rings 28 an dem Radialsteg 14 des Dichtungsträgers 12. Der vordere Ring 28 umfasst dabei den Innenflansch 64, den Außenflansch 60 sowie den mit dem Innen- und Außenflansch 64, 60 einstückig verbundenen Steg 32.

### Bezugszeichenliste:

- 10: Dichtungsanordnung
- 12: Dichtungsträger
- 14: Radialsteg
- 16: Axialsteg
- 18: Dichtungselement
- 20: Anlagefläche
- 22: Verbindungsbereich
- 28: Vorderer Ring, vorderes Ringsegment
- 30: Hinterer Ring, hinteres Ringsegment
- 32: Steg
- 34: Steg
- 36: Aufnahme
- 48: Gleitstein
- 50: Axialbolzen
- 52: Öffnung
- 54: Öffnung
- 56: Öffnung
- 58: Öffnung
- 60: Außenflansch
- 62: Außenflansch
- 64: Innenflansch
- 66: Innenflansch
- 68: Oberfläche
- R: Radiale Erstreckungsrichtung
- A: Axiale Erstreckungsrichtung
- S: Strömungsrichtung

## Patentansprüche

1. Dichtungsanordnung (10) für eine Strömungsmaschine, insbesondere für ein Flugtriebwerk, zur Abdichtung eines Radialspaltes zwischen einem Rotor und einem Stator, umfassend
- mindestens ein Dichtelement (18),
- mindestens einen Dichtungsträger (12) zur Halterung und/oder Befestigung des mindestens einen Dichtungselements (18), wobei der Dichtungsträger (12) einen in eine radiale Erstreckungsrichtung (R) sich ersteckenden Radialsteg (14) und einen damit einstückig ausgebildeten, in eine axiale Erstreckungsrichtung (A) sich erstreckenden Axialsteg (16) aufweist, wobei der Dichtungsträger (12) T-förmig ausgebildet ist, derart, dass sich der Axialsteg (16) in axialer Richtung (A) beiderseits über einen Verbindungsbereich (22) zwischen dem Radialsteg (14) und dem Axialsteg (16) hinaus erstreckt und wobei das Dichtungselement (18) an einer radial innenliegenden Anlagefläche (20) des Axialstegs (16) angeordnet ist, und
- einen in Strömungsrichtung (S) der Strömungsmaschine betrachtet vorderen Ring oder ein vorderes Ringsegment (28) und/oder einen hinteren Ring oder ein hinteres Ringsegment (30) mit jeweils einem radial verlaufenden Steg (32, 34),
wobei einer der Stege (32, 34) mit dem Radialsteg (14) eine Aufnahme (36) zur Aufnahme eines Elementes des Stators ausbildet,
**dadurch gekennzeichnet, dass**
an einem radial inneren Ende von zumindest diesem radial verlaufenden Steg (32, 34) ein sich axial erstreckender Innenflansch (64, 66) ausgebildet ist und zumindest der Innenflansch (66) des radial verlaufenden Steges (34), welcher mit dem Radialsteg (14) des Dichtungsträgers (12) die Aufnahme (36) ausbildet, mit einer radial außenliegenden Oberfläche (68) des Axialstegs (16) stoff- und/oder formschlüssig verbunden ist.

2. Dichtungsanordnung (10) nach Anspruch 1,
**dadurch gekennzeichnet, dass**
der Innenflansch (66) mit der Oberfläche (68) verlötet oder verschweißt ist.

3. Dichtungsanordnung (10) nach Anspruch 1 oder 2,
**dadurch gekennzeichnet, dass**
an einem radial äußeren Ende von zumindest einem der radial verlaufenden Stege (32, 34) ein sich axial erstreckender Außenflansch (60, 62) ausgebildet ist.

4. Dichtungsanordnung (10) nach einem der vorhergehenden Ansprüche,
**dadurch gekennzeichnet, dass**
der vordere Ring oder das vordere Ringsegment (28) und/oder der hintere Ring oder das hintere Ringsegment (30) als Blechelemente ausgebildet sind.

5. Dichtungsanordnung (10) nach einem der vorhergehenden Ansprüche,
**dadurch gekennzeichnet, dass**
das Element des Stators ein Schaufelfuß oder ein Schaufelfußsegment eines Leitschaufelrings, eines Leitschaufelringsegmentes oder einer Leitschaufel der Strömungsmaschine ist.

6. Dichtungsanordnung (10) nach einem der vorhergehenden Ansprüche,
**dadurch gekennzeichnet, dass**
ein Gleitstein (48) mittels mindestens einem Axialbolzen (50) mit den radial verlaufenden Stegen (32, 34) sowie dem Radialsteg (14) verbunden ist.

7. Dichtungsanordnung (10) nach einem der vorhergehenden Ansprüche,
**dadurch gekennzeichnet, dass**
der Dichtungsträger (12) der Dichtungsanordnung (10) mittels Schmieden, Gießen, Drehen oder einem additiven Fertigungsverfahren hergestellt ist.

8. Dichtungsanordnung (10) nach einem der vorhergehenden Ansprüche,
**dadurch gekennzeichnet, dass**
das Dichtungselement (18) als Wabendichtung ausgebildet ist.

9. Dichtungsanordnung (10) nach einem der vorhergehenden Ansprüche,
**dadurch gekennzeichnet, dass**
die Dichtungsanordnung (10) ein SIAS (Static Inner Air Seal)-Ring oder ein Ringsegment davon ist.

10. Verfahren zur Herstellung der Dichtungsanordnung (10) gemäß einem der Ansprüche 1 bis 9 umfassend zumindest die folgenden Verfahrensschritte:
- Herstellen des Dichtungsträgers (12) der Dichtungsanordnung (10) mittels Schmieden, Gießen, Drehen oder einem additiven Fertigungsverfahren;
- Anordnen des vorderen Rings oder des vorderen Ringsegments (28) und/oder des hinteren Rings oder des hinteren Ringsegments (30) im Bereich des Radialstegs (14) des Dichtungsträgers (12) zur Ausbildung der Aufnahme (36) für das Statorelement; und
- stoff- und/oder formschlüssiges Verbinden des sich axial erstreckenden Innenflansches (64, 66) des die Aufnahme (36) ausbildenden vorderen Rings oder vorderen Ringsegments (28) und/oder hinteren Rings oder hinteren Ringsegments (30) mit der radial außenliegenden Oberfläche (68) des Axialstegs (16) des Dichtungsträgers (12).

11. Verfahren nach Anspruch 10,
**dadurch gekennzeichnet, dass**
der Innenflansch (66) mit der Oberfläche (68) verlötet oder verschweißt wird.

12. Strömungsmaschine, insbesondere Flugtriebwerk, mit mindestens einer Dichtungsanordnung (10) gemäß einem der Ansprüche 1 bis 9 und/oder mit mindestens einer Dichtungsanordnung (10) hergestellt mittels einem Verfahren gemäß einem der Ansprüche 10 bis 11.

## Claims

1. Seal arrangement (10) for a turbomachine, in particular for an aircraft engine, for sealing a radial gap between a rotor and a stator, comprising
- at least one sealing element (18),
- at least one seal support (12) for mounting and/or fastening the at least one sealing element (18), the seal support (12) having a radial projection (14) which extends in a radial extension direction (R) and an axial projection (16) which is integral with the radial projection and extends in an axial extension direction (A), the seal support (12) being T-shaped such that the axial projection (16) extends in the axial direction (A) on both sides beyond a connecting region (22) between the radial projection (14) and the axial projection (16), and the sealing element (18) being arranged on a radially inner contact surface (20) of the axial projection (16), and
- a front ring, viewed in the flow direction (S) of the turbomachine, or a front ring segment (28) and/or a rear ring or a rear ring segment (30) each having a radially extending projection (32, 34),
- one of the projections (32, 34) and the radial projection (14) forming a receptacle (36) for receiving an element of the stator, **characterized in that** an axially extending inner flange (64, 66) is formed at a radially inner end of at least said radially extending projection (32, 34), and at least the inner flange (66) of the radially extending projection (34), which flange forms the receptacle (36) together with the radial projection (14) of the seal support (12), is integrally and/or form-fittingly connected to a radially outer surface (68) of the axial projection (16).

2. Seal arrangement (10) according to claim 1, **characterized in that** the inner flange (66) is soldered or welded to the surface (68).

3. Seal arrangement (10) according to either claim 1 or claim 2, **characterized in that** an axially extending outer flange (60, 62) is formed at a radially outer end of at least one of the radially extending projections (32, 34).

4. Seal arrangement (10) according to any of the preceding claims, **characterized in that** the front ring or the front ring segment (28) and/or the rear ring or the rear ring segment (30) are formed as sheet metal elements.

5. Seal arrangement (10) according to any of the preceding claims, **characterized in that** the element of the stator is a blade root or a blade root segment of a guide blade ring, of a guide blade ring segment or of a guide blade of the turbomachine.

6. Seal arrangement (10) according to any of the preceding claims, **characterized in that** a sliding block (48) is connected to the radially extending projections (32, 34) and to the radial projection (14) by means of at least one axial bolt (50).

7. Seal arrangement (10) according to any of the preceding claims, **characterized in that** the seal support (12) of the seal arrangement (10) is produced by means of forging, casting, turning or an additive manufacturing process.

8. Seal arrangement (10) according to any of the preceding claims, **characterized in that** the sealing element (18) is designed as a honeycomb seal.

9. Seal arrangement (10) according to any of the preceding claims, **characterized in that** the seal arrangement (10) is an SIAS (static inner air seal) ring or a ring segment thereof.

10. Method for producing the seal arrangement (10) according to any of claims 1 to 9, comprising at least the following method steps:
- producing the seal support (12) of the seal arrangement (10) by means of forging, casting, turning or an additive manufacturing process;
- arranging the front ring or the front ring segment (28) and/or the rear ring or the rear ring segment (30) in the region of the radial projection (14) of the seal support (12) in order to form the receptacle (36) for the stator element; and
- integrally and/or form-fittingly connecting the axially extending inner flange (64, 66) of the front ring or front ring segment (28) and/or rear ring or rear ring segment (30) forming the receptacle (36) to the radially outer surface (68) of the axial projection (16) of the seal support (12).

11. Method according to claim 10, **characterized in that** the inner flange (66) is soldered or welded to the surface (68).

12. Turbomachine, in particular an aircraft engine, having at least one seal arrangement (10) according to any of claims 1 to 9 and/or at least one seal arrangement (10) produced by a method according to either claim 10 or claim 11.

## Revendications

1. Agencement d'étanchéité (10) pour une turbomachine, en particulier pour un moteur d'avion, destiné à assurer l'étanchéité d'une fente radiale entre un rotor et un stator, comprenant
- au moins un élément d'étanchéité (18),
- au moins un support d'étanchéité (12) destiné à maintenir et/ou à fixer l'au moins un élément d'étanchéité (18), le support d'étanchéité (12) comportant une traverse radiale (14) s'étendant dans un sens d'extension radial (R) et une traverse axiale (16) réalisée en une seule pièce avec celle-ci et s'étendant dans un sens d'extension axial (A), le support d'étanchéité (12) étant réalisé en forme de T, de sorte que la traverse axiale (16) s'étende dans le sens axial (A) des deux côtés par-dessus une zone de liaison (22) entre la traverse radiale (14) et la traverse axiale (16), et l'élément d'étanchéité (18) étant disposé sur une surface d'appui (20) radialement intérieure de la traverse axiale (16), et
- un anneau avant vu dans le sens d'écoulement (S) de la turbomachine ou un segment d'anneau avant (28) et/ou un anneau arrière ou un segment d'anneau arrière (30) comportant chacun une traverse (32, 34) s'étendant radialement,
- l'une des traverses (32, 34) formant un réceptacle (36) avec la traverse radiale (14), lequel réceptacle est destiné à recevoir un élément du stator, **caractérisé en ce que**, à une extrémité radialement intérieure d'au moins cette traverse (32, 34) s'étendant radialement, une bride intérieure (64, 66) s'étendant axialement est réalisée, et **en ce qu'**au moins la bride intérieure (66) de la traverse (34) s'étendant radialement et formant le réceptacle (36) avec la traverse radiale (14) du support d'étanchéité (12) est reliée par adhérence et/ou par engagement positif à une surface (68) radialement extérieure de la traverse axiale (16).

2. Agencement d'étanchéité (10) selon la revendication 1, **caractérisé en ce que** la bride intérieure (66) est reliée à la surface (68) par brasage ou par soudage.

3. Agencement d'étanchéité (10) selon la revendication 1 ou 2, **caractérisé en ce que**, à une extrémité radialement extérieure d'au moins l'une des traverses (32, 34) s'étendant radialement, une bride extérieure (60, 62) s'étendant axialement est réalisée.

4. Agencement d'étanchéité (10) selon l'une des revendications précédentes, **caractérisé en ce que** l'anneau avant ou le segment d'anneau avant (28) et/ou l'anneau arrière ou le segment d'anneau arrière (30) sont réalisés sous la forme d'éléments en tôle.

5. Agencement d'étanchéité (10) selon l'une des revendications précédentes, **caractérisé en ce que** l'élément du stator est un pied d'aube ou un segment de pied d'aube d'un anneau d'aube de guidage, d'un segment d'anneau d'aube de guidage ou d'une aube de guidage de la turbomachine.

6. Agencement d'étanchéité (10) selon l'une des revendications précédentes, **caractérisé en ce qu'**un coulisseau (48) est relié par au moins un boulon axial (50) aux traverses (32, 34) ainsi qu'à la traverse (14) s'étendant radialement.

7. Agencement d'étanchéité (10) selon l'une des revendications précédentes, **caractérisé en ce que** le support d'étanchéité (12) de l'agencement d'étanchéité (10) est réalisé par forgeage, coulée, tournage ou par un procédé de fabrication additif.

8. Agencement d'étanchéité (10) selon l'une des revendications précédentes, **caractérisé en ce que** l'élément d'étanchéité (18) est réalisé sous la forme d'un joint en nid d'abeille.

9. Agencement d'étanchéité (10) selon l'une des revendications précédentes, **caractérisé en ce que** l'agencement d'étanchéité (10) est un anneau SIAS (Static Inner Air Seal) ou un segment d'anneau de celui-ci.

10. Procédé de fabrication de l'agencement d'étanchéité (10) selon l'une des revendications 1 à 9, comprenant au moins les étapes de procédé suivantes :
- fabrication du support d'étanchéité (12) de l'agencement d'étanchéité (10) par forgeage, coulée, tournage ou par un procédé de fabrication additif ;
- agencement de l'anneau avant ou du segment d'anneau avant (28) et/ou de l'anneau arrière ou du segment d'anneau arrière (30) dans la zone de la traverse radiale (14) du support d'étanchéité (12) pour former le réceptacle (36) de l'élément de stator ; et
- liaison par adhérence et/ou par engagement positif de la bride intérieure (64, 66) s'étendant axialement de l'anneau avant ou du segment d'anneau avant (28) et/ou de l'anneau arrière ou du segment d'anneau arrière (30) formant le réceptacle (36) avec la surface (68) radialement extérieure de la traverse axiale (16) du support d'étanchéité (12).

11. Procédé selon la revendication 10, **caractérisé en ce que** la bride intérieure (66) est reliée à la surface (68) par brasage ou par soudage.

12. Turbomachine, en particulier moteur d'avion, comprenant au moins un agencement d'étanchéité (10) selon l'une des revendications 1 à 9 et/ou au moins un agencement d'étanchéité (10) réalisé par un procédé selon l'une des revendications 10 à 11.
